# EUROPÄISCHE PATENTANMELDUNG

(11) **EP 0 611 905 A1**
(43) Veröffentlichungstag der Anmeldung: **24.08.1994**
(21) Anmeldenummer: 94102121.4
(22) Anmeldetag: 11.02.1994
(51) Int. Cl.: F16J 15/44

(54) **Vorrichtung zum berührungsfreien Abdichten zwischen Räumen unterschiedlichen Druckes**

(30) Priorität: 17.02.1993 DE 4304805
(71) Anmelder: ABB PATENT GmbH, D-68309 Mannheim (DE)
(72) Erfinder: Herold, Bernhard, 90547 Stein (DE)
(74) Vertreter: Rupprecht, Klaus, Dipl.-Ing.

(57) **Zusammenfassung**

Bei einer Vorrichtung zum berührungsfreien Abdichten von Zwischenräumen unterschiedlichen Druckes mit Hilfe von Dichtungsspitzen, die in Stufen angeordnet sind, wird eine verbesserte Dichtwirkung dadurch erreicht, daß zwei Gruppen von gegeneinander gerichteten Dichtungsspitzen (2, 3) vorgesehen sind, von denen die eine Gruppe (2) zu einem rotierenden Teil (B) und die andere Gruppe (3) zu einem feststehenden Teil (A) gehört. Die Dichtungsspitzen (2) der ersten Gruppe sind gegenüber den Dichtungsspitzen (3) der zweiten Gruppe axial so zueinander versetzt, daß der im Übergangsbereich von einer Stufe (1a) zur nächsten Stufe (1b) zwischen zwei gegeneinander gerichteten Dichtungsspitzen (2, 3) entstehende Axialspalt (4) unter Berücksichtigung vorgegebener Toleranzen und temperaturbedingter axialer Verschiebungen, minimiert ist.

## Beschreibung

Die Erfindung betrifft eine Vorrichtung nach dem Oberbegriff des Anspruches 1.

Bei Strömungsmaschinen, insbesondere Dampfmaschinen und Truboverdichtern, müssen die Wellendurchtritte zwischen Räumen unterschiedlichen Druckes mit geeigneten Dichtungen versehen werden, damit es nicht zu einem Druckverlust mit vermindertem Wirkungsgrad kommt. Eine besonders gute Dichtwirkung wird mit sogenannten Labyrinthdichtungen erzielt. Dabei unterscheidet man zwischen Vollabyrinthen und Durchblicklabyrinthen.

Bei den Vollabyrinthen ist sowohl am rotierenden Teil, als auch am feststehenden Teil jeweils eine Gruppe von Dichtungsspitzen angeordnet und diese sind zueinander so versetzt, daß die beiden kammartig angeordneten Gruppen ineinandergreifen. Es erfolgt also eine Überlappung der jeweils benachbarten Spitzen beider Gruppen. Das in der Strömungsmaschine verwendete Antriebsmedium, also in der Regel der Dampf, findet somit bei einem Vollabyrinth keinen direkten Durchgang an den Dichtungsspitzen vorbei, sondern muß sich zwischen den Dichtungsspitzen beider Gruppen hindurchzwängen und wird hierbei durch die entstehenden Wirbel stark behindert. Vollabyrinthe lassen sich jedoch nur dort einsetzen, wo die Dichtung für die Montage axial geteilt werden kann, da ein Einschieben in axialer Richtung nicht möglich ist.

Um den mit einer Dichtungsteilung verbundenen Aufwand zu vermeiden, verwendet man bevorzugt Durchblicklabyrinthe, bei denen entweder nur einseitig eine Gruppe mit Dichtungsspitzen angeordnet wird, oder zwischen zwei sich gegenüberstehenden Gruppen aus Dichtungsspitzen ein radialer Dichtungsspalt verbleibt, damit bei der Montage die Dichtungsspitzen der einen Gruppe an den Dichtungsspitzen der anderen Gruppe ohne Berührung vorbeigleiten können.

Der bei Durchblicklabyrinthen unvermeidliche Radialspalt führt natürlich zu Verlusten, die der Konstrukteur gerne vermindern würde. Eine Verbesserung in dieser Richtung bringt ein treppenförmiger Labyrinthspalt, mit dem es gelingt, den "Durchblick" zu verhindern und dadurch die Lässigkeit wesentlich herabzusetzen. Die an beiden Teilen, also z. B. einem Rotor und einem feststehenden Teil ausgebildeten Stufen sind dabei so angeordnet, daß das innere Teil aus dem äußeren in Richtung des durch die Stufen wachsenden Durchmessers, ohne Berührung herausgezogen bzw. in umgekehrte Richtung montiert werden kann.

Aufgabe der Erfindung ist es, ausgehend von einer Dichtung mit stufenförmigem Labyrinthspalt eine Vorrichtung zum berührungsfreien Abdichten zu schaffen, mit der die Dichtwirkung weiter verbessert wird.

Diese Aufgabe wird durch die im Anspruch 1 gekennzeichneten Merkmale gelöst. Zweckmäßige Ausgestaltungen und Weiterbildungen des Erfindungsgegenstandes sind in den Unteransprüchen genannt.

Während bekannte Anordnungen bei der Erzeugung stufenförmiger Labyrinthspalte nur einseitig mit Dichtungsspitzen arbeiten, wird erfindungsgemäß durch das beidseitige Anordnen von Dichtungsspitzen ein höherer Grad der Verwirbelung und damit eine bessere Abdichtung erreicht. Weiterhin sind die Dichtungsspitzen der ersten Gruppe gegenüber den Dichtungsspitzen der zweiten Gruppe axial so zueinander versetzt, daß der im Übergangsbereich von einer Stufe zur nächsten zwischen zwei gegeneinander gerichteten Dichtungsspitzen entstehende Axialspalt minimiert ist. Die Minimierung muß dabei unter Berücksichtigung vorgegebener Toleranzen und temperaturbedingter axialer Verschiebungen erfolgen. Somit wird durch den Axialspalt die ohnehin gegenüber einem Radialspalt verminderte Lässigkeit der Dichtung weiter reduziert.

In einer vorteilhaften Weiterbildung des Erfindungsgegenstandes ist vorgesehen, die Länge der Dichtungsspitzen im Übergangsbereich von einer Stufe zur nächsten so zu bemessen, daß kein wirksamer sich radial erstreckender Dichtungsspalt entsteht. Dies wird dadurch erreicht, daß sich die Dichtungsspitzen im Bereich der Stufen überlappen oder zumindest so lang sind, daß sie sich gerade berühren würden, wenn sie nicht zueinander versetzt wären.

Um eine besonders gute Abdichtung zu erreichen, ist es ratsam pro Stufe eine Dichtungsstelle vorzusehen, die dann durch mindestens zwei gegeneinander gerichtete Dichtungsspitzen gebildet wird. Mit jeder Stufe vergrößert, bzw. verkleinert sich jedoch der Außendurchmesser des drehenden Teils bzw. der Innendurchmesser des stehenden Teils. Um den hiermit verbundenen Aufwand in angemessenen Grenzen zu halten, kann man pro Stufe auch mehrere Dichtungsstellen vorsehen, die dann durch mehrere gegeneinander gerichtete Dichtungsspitzen gebildet werden. Hierbei ist allerdinggs zu berücksichtigen, daß nur im Bereich des Übergangs von einer Stufe zur nächsten die Wirkung des Radialspalts weitgehend ausgeschaltet werden kann, die übrigen Dichtungspitzen aber einen wirksamen Radial- und Axialspalt aufweisen.

Für die Herstellung der Dichtung ist es zweckmäßig, mindestens eine Gruppe der Dichtungsspitzen mit Hilfe eines Stemmdrahtes in eine entsprechende Nut einzustemmen. Alternativ dazu besteht allerdings auch die Möglichkeit, mindestens eine Gruppe aus dem Vollen herauszudrehen. Vorteilhaft ist es dabei, die Dichtungsspitzen wie einen Kamm mit gleichmäßigem Spitzenabstand anzuordnen. Die Spitzen können sich auch bezüglich ihrer Breite unterscheiden. Zweckmäßig ist es weiterhin, mindestens einige der Dichtungsspitzen einer Gruppe als Doppelspitzen auszubilden. Durch entsprechende Anordnung dieser Doppelspitzen kann jede der beiden Spitzen mit einer zugehörigen entgegengerichtetem Dichtungsspitze der anderer Gruppe beidseitig von dieser einen Axialspalt bilden. Neben den Axialspalten müssen jedoch wegen der berührungsfreien Montage auch Radialspalte verbleiben, soweit sich die Dichtungspitzen nicht im Bereich eines Stufenüberganges befinden.

Andererseits ist es von Vorteil, solche Dichtungsspitzen, die im Bereich einer Stufe angeordnet sind, bezüglich ihrer Länge so zu gestalten, daß kein wirksamer Radialspalt entsteht. Dies gilt auch für eine der beiden Dichtungsspitzen einer Doppelspitze, soweit diese in axialer Einschubrichtung vor der zugehörigen entgegengerichteten Dichtungsspitze liegt.

Weitere Details der Erfindung werden anhand der Zeichnungen beschrieben, wobei die Figuren 1 und 2 dem Stand der Technik entnommen sind, um das Verständnis der Figuren 3 und 4 zu erleichtern. Es zeigen:

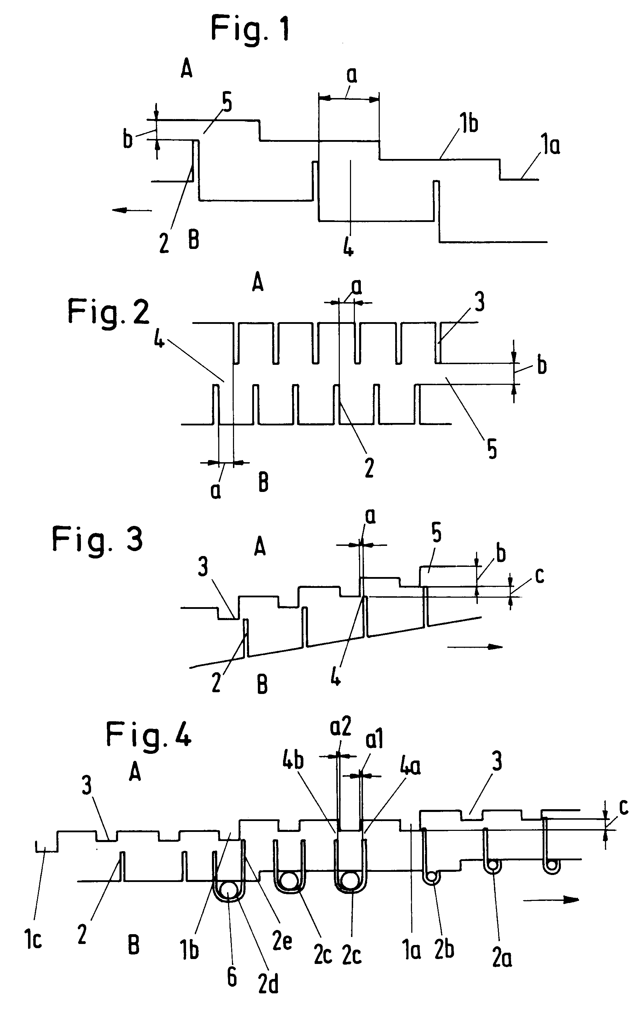

- Fig. 1: einen stufenförmigen Labyrinthspalt mit einseitig angeordneten Dichtungsspitzen,
- Fig. 2: eine Dichtung als Durchblicklabyrinth mit zweiseitig angeordneten Dichtungsspitzen,
- Fig. 3: eine Dichtung mit stufenförmigem Labyrinthspalt mit zweiseitig angeordneten Dichtungsspitzen,
- Fig. 4: eine der Figur 3 entsprechende Anordnung, bei der pro Stufe mehrere Dichtungstellen vorgesehen sind.

Die den Stand der Technik verdeutlichende Darstellung in Figur 1 zeigt eine Dichtung mit einem treppenförmigen Labyrinthspalt, wobei A ein feststehender Teil und B ein rotierender Teil der Dichtung sein kann. Den Stufen 1 des feststehenden Teils stehen gestuft angeordnete Dichtungsspitzen 2 des rotierenden Teils B gegenüber und bilden so einen Labyrinthspalt. Die Dichtwirkung dieses Labyrinthspaltes hängt einerseits von der Breite b des sich radial erstreckenden Dichtungspaltes 5 und andererseits von der Breite a des sich axial erstreckenden Dichtungsspaltes 4 ab. Im Unterschied zu Figur 2, wo die Breite a des Axialspaltes 4 nur von untergeordneter Bedeutung ist, und die Lässigkeit fast ausschließlich durch die Breite b des Radialspaltes 5 bestimmt wird, ist hier die Breite a des Axialspaltes 5 durchaus wesentlich.

Die Erfindung geht von der Überlegung aus, daß eine wesentliche Verbesserung der Dichtung erreicht werden kann, wenn es gelingt unter Umkehrung der Verhältnisse nach Figur 2 den Radialspalt im Verhältnis zum Axialspalt bedeutungslos zu machen. Dies läßt sich durch Anordnungen nach den Figuren 3 und 4 erreichen.

Wie Figur 3 zeigt, sind entsprechend Figur 2 zwei Gruppen einander entgegengerichteter Dichtungsspitzen vorgesehen, die mit einer der Figur 1 entsprechenden Stufigkeit angeordnet sind. Wie bei Figur 1, gelingt es auch bei Figur 3 das innenliegende Teil B vom außenliegenden Teil A in Pfeilrichtung zu trennen oder entgegen der Pfeilrichtung zu montieren, weil mit jeder Stufe sich der Durchmesser des rotierenden Teils B um die Stufenhöhe c vermindert bzw. vergrößert, und damit beim Trennen der Abstand zwischen den beiden Teilen A, B größer wird.

Sorgt man dafür, daß die an der jeweiligen Dichtungsstelle zusammenwirkenden Dichtungsspitzen 2 und 3 der gegeneinandergerichteten Gruppen sich gegenseitig überlappen oder auf gleicher Höhe enden, so kann man zwar immer noch einen Radialspalt 5 der Breite b definieren, doch wird dieser bezüglich der Dichtwirkung bei einem entsprechend kleinen Axialspalt 4 mit der Breite a praktisch ohne Bedeutung sein. Es kommt somit darauf an, diesen Axialspalt 4 zu minimieren. Ein wesentlicher Vorteil dieser Anordnung ist, daß, bei einer ausreichenden Stufenhöhe c, ein radialer Versatz der Spitzen durch eine exzentrische Lage oder durch Fliehkraft usw., keinen Einfluß auf die Dichtwirkung hat. Axiale Verschiebungen sind in ihren Auswirkungen zwar kritisch, können aber durch die Wahl der Gehäusefixpunkte weitgehend vermieden werden.

In Figur 4 ist noch ein Aufbau dargestellt, bei dem innerhalb einer Stufe mehrere Dichtungsstellen vorgesehen sind. Jede der drei Stufen 1a, 1b, 1c ist mit drei Dichtungsstellen versehen, zu denen einerseits Dichtungsspitzen 3 des feststehenden Teils A und andererseits Dichtungsspitzen 2 des rotierenden Teils B gehören. Die am rotierenden Teil B befestigten Dichtungspitzen 2 sind mit Hilfe eines Stemmdrahtes 6 in entsprechende Nuten eingestemmt und teilweise als Doppelspitzen 2c, 2d ausgebildet. Demgegenüber sind die Dichtungsspitzen 3 durch entsprechendes Abdrehen hergestellt.

Bei mehreren Dichtungsstellen pro Stufe besteht der Vorteil, daß die durch die Stufung entstehende Durchmesseränderung, bezogen auf die Achslänge weniger groß wird. Dem steht jedoch gegenüber, daß die innerhalb einer Stufe liegenden Dichtungsstellen im Prinzip, wie bei Figur 2 dargestellt, ausgebildet werden müssen, da zur Montage ein ausreichender Abstand zwischen den Spitzen bestehen muß. Nur im Bereich des Übergangs von einer Stufe zur nächsten dürfen die jeweiligen Dichtungspitzen 2b, 2e sich mit den entgegengerichteten Dichtungsspitzen 3 überlappen.

Mit Hilfe der Doppelspitzen 2c, 2d wird nicht nur eine verbesserte Dichtwirkung an den jeweiligen Dichtungsstellen erreicht, sondern die jeweilige Breite a1, a2 der Axialspalte 4a, 4b gleicht sich bei Axialverschiebungen derart aus, daß eine Vergrößerung des einen Axialspaltes zu einer Verkleinerung des anderen führt und die Dichtwirkung dadurch insgesamt etwa gleich bleibt.

## Patentansprüche

1. Vorrichtung zum berührungslosen Abdichten zwischen Räumen unterschiedlichen Druckes, insbesondere im Bereich von Wellendurchtritten bei Strömungsmaschinen, mit Dichtungsspitzen (2, 3), die so in Stufen (1) angeordnet sind, daß die Lässigkeit der Dichtung von einer Stufe (1) zur nächsten, wesentlich durch sich axial erstreckende Dichtungsspalte (4) bestimmt ist, **dadurch gekennzeichnet**, daß zwei Gruppen von gegeneinander gerichteten Dichtungsspitzen (2, 3) angeordnet sind, von denen die eine Gruppe (2) zu einem rotierenden Teil (B) und die andere Gruppe (3) zu einem feststehenden Teil (A) gehört und die Dichtungsspitzen (2) der ersten Gruppe gegenüber den Dichtungsspitzen (3) der zweiten Gruppe axial so zueinander versetzt sind, daß der im Übergangsbereich von einer Stufe (1a) zur nächsten Stufe (1b) zwischen zwei gegeneinander gerichteten Dichtungsspitzen (2, 3) entstehende Axialspalt (4) unter Berücksichtigung vorgegebener Toleranzen und temperaturbedingter axialer Verschiebungen, minimiert ist.

2. Vorrichtung nach Anspruch 1, dadurch gekennzeichnet, daß die Länge der Dichtungsspitzen (2, 3) im Übergangsbereich von einer Stufe (1a) zur nächsten (1b) so bemessen ist, daß sie keinen für die Abdichtung bedeutsamen sich radial erstreckenden Dichtungsspalt (5) bildet, was bedeutet, daß sich die Dichtungsspitzen (2, 3) überlappen oder, sofern sie nicht zueinander versetzt wären, gerade berühren würden.

3. Vorrichtung nach einem der Ansprüche 1 oder 2, dadurch gekennzeichnet, daß pro Stufe (1) eine Dichtungsstelle vorgesehen ist, die durch mindestens zwei gegeneinander gerichtete Dichtungsspitzen (2, 3) gebildet wird.

4. Vorrichtung nach einem der Ansprüche 1 oder 2, dadurch gekennzeichnet, daß pro Stufe (1a, 1b) mehrere Dichtungsstellen vorgesehen sind, die durch mehrere gegeneinander gerichtete Dichtungsspitzen (2, 3) gebildet sind.

5. Vorrichtung nach einem der vorhergehenden Ansprüche, dadurch gekennzeichnet, daß die Dichtungsspitzen (2) mindestens einer Gruppe eingestemmt sind.

6. Vorrichtung nach einem der vorhergehenden Ansprüche, dadurch gekennzeichnet, daß die Dichtungsspitzen (3) mindestens einer Gruppe aus dem Vollen herausgedreht sind.

7. Vorrichtung nach einem der vorhergehenden Ansprüche, dadurch gekennzeichnet, daß die Dichtungspitzen (2, 3) wie ein Kamm mit gleichmäßigem Spitzenabstand angeordnet sind.

8. Vorrichtung nach einem der vorhergehenden Ansprüche, dadurch gekennzeichnet, daß die Dichtungsspitzen der einen Gruppe (3) breiter sind als die der anderen entgegengerichteten Gruppe (2).

9. Vorrichtung nach einem der vorhergehenden Ansprüche, dadurch gekennzeichnet, daß mindestens einige der Dichtungsspitzen einer Gruppe (2) als Doppelspitzen (2c, 2d) ausgebildet sind, und diese mit der zugehörigen Dichtungsspitze (3) der entgegengerichteten anderen Gruppe beidseitig einen Axialspalt (4a, 4b) bilden.

10. Vorrichtung nach Anspruch 9, dadurch gekennzeichnet, daß bei einer im Bereich einer Stufe (1b) angeordneten Doppelspitze (2d) die Dichtungsspitze (2e), die in axialer Einschubrichtung vor der zugehörigen entgegengericheten Dichtungsspitze (3) liegt, keinen wirksamen Radialspalt bildet.
